# FASCICULE DE BREVET EUROPEEN

(11) **EP 1 715 141 B1**
(45) Date de publication et mention de la délivrance du brevet: **13.12.2017**
(21) Numéro de dépôt: 06112761.9
(22) Date de dépôt: 19.04.2006
(51) Int. Cl.: F01D 17/10, F01D 5/08, F16K 31/56, F04D 27/02, F04D 29/58

(54) **Dispositif de régulation du débit d'air circulant dans un arbre rotatif d'une turbomachine**
Vorrichtung zur Regelung des Luftdurchflusses in einer Turbomaschinenrotorwelle
Device for the control of an air flow flowing in a rotor shaft of a turbine.

(30) Priorité: 21.04.2005 FR 0503989
(43) Date de publication de la demande: 25.10.2006
(73) Titulaire: SNECMA, 75015 Paris (FR)
(72) Inventeur: FRIEDEL, Jérôme, 77115, Blandy (FR); MOURLAN, Jean-Pierre, 94130, Nogent Sur Marne (FR); PLONA, Daniel, 77870, Vulaines (FR)
(74) Mandataire: Boura, Olivier

(56) Documents cités:
- EP-A- 0 468 782
- DE-A1- 2 121 281
- FR-A- 2 146 715
- GB-A- 2 046 363
- US-A- 1 844 659
- US-A- 3 575 528
- PATENT ABSTRACTS OF JAPAN vol. 007, no. 173 (M-232), 30 juillet 1983 (1983-07-30) & JP 58, 077127, A, (HITACHI SEISAKUSHO KK), 10 mai 1983 (1983-05-10)

## Description

### Arrière-plan de l'invention

La présente invention se rapporte à un dispositif permettant de réguler le débit d'air circulant dans un arbre rotatif d'une turbomachine, et notamment dans un arbre de compresseur d'une telle turbomachine.

Sur une turbomachine, il est habituel de prélever de l'air pour différents usages, notamment pour réguler la pressurisation des enceintes à huile afin d'empêcher les fuites d'huile, ou pour refroidir certaines pièces de la turbomachine.

Les fonctions de pressurisation et de refroidissement de ces parties de la turbomachine sont réalisées à partir de prélèvements d'air issus notamment des compresseurs haute et basse pression de la turbomachine, le choix dépendant des conditions de température et de pression souhaitées pour le prélèvement. L'air ainsi prélevé transite en général à l'intérieur des arbres de compresseur ou de turbine afin d'être envoyé vers les enceintes à huile à pressuriser ou les éléments de la turbomachine à refroidir.

Les prélèvements d'air dans les compresseurs haute et basse pression sont donc dépendants du régime de rotation de l'arbre entraînant ces compresseurs. Pour la pressurisation des enceintes à huile, il est notamment nécessaire, aux bas régimes, de prélever un air fortement comprimé afin d'assurer une bonne étanchéité des enceintes à huile.

Prélever un air fortement comprimé à haut régime est cependant néfaste à la durée de vie des systèmes d'étanchéité. En effet, cela entraîne un réchauffement excessif de certaines pièces sensibles de la turbomachine et est pénalisant en terme de performance.

Le brevet EP 0 698 739 B1 divulgue un dispositif de prélèvement d'air comprenant une coquille torique disposée dans une paroi balayée par un flux d'air, cette coquille étant susceptible par pivotement autour d'un axe de passer d'une position de saillie maximale sur la paroi à une position rentrée dans cette paroi. Ce dispositif ne permet cependant pas de réguler le débit d'air prélevé en fonction des besoins nécessaires en air.

GB 2 046 363 et JP 58 077 127 divulguent un dispositif de régulation selon le préambule de la revendication 1.

### Objet et résumé de l'invention

La présente invention a donc pour but principal de pallier de tels inconvénients en proposant un dispositif de régulation du débit d'air circulant dans un arbre rotatif de turbomachine en fonction des besoins nécessaires en air pour l'élément de la turbomachine à pressuriser ou à refroidir afin d'optimiser les performances globales de la turbomachine.

A cet effet, il est prévu un dispositif de régulation du débit d'air circulant dans un arbre rotatif d'une turbomachine, selon les caractéristiques de la revendication 1, l'arbre comportant au moins un orifice le traversant pour le passage de l'air, caractérisé en ce que le dispositif comporte au moins une soupape d'obturation de l'orifice qui est solidaire d'une lame déformable à comportement bilinéaire, la lame étant fixée sur l'arbre et apte à se déformer sous l'effet de la force centrifuge résultant de la rotation de l'arbre de sorte que la soupape est apte à prendre deux positions différentes selon le régime de rotation de l'arbre ; une position dans laquelle elle obture l'orifice et une autre position dans laquelle elle libère l'orifice pour permettre le passage de l'air.

L'invention consiste à utiliser l'effet de la force centrifuge résultant de la rotation de l'arbre pour moduler la section de passage de l'air circulant au travers de cet arbre et qui est destiné à la pressurisation ou au refroidissement de certaines parties de la turbomachine. La soupape du dispositif selon l'invention est disposée dans une position adéquate en fonction de l'effet recherché : initialement, elle est soit obturante, soit libérant l'orifice de l'arbre. Sous l'effet de la force centrifuge et selon la position initiale de la soupape, la lame solidaire de la soupape se déforme, libérant ou obturant l'orifice de l'arbre.

L'utilisation d'une lame à comportement bilinéaire donne des résultats fiables en termes d'ouverture et de fermeture de l'orifice de l'arbre. En effet, une lame à comportement bilinéaire permet d'obtenir une ouverture et une fermeture de l'orifice de l'arbre qui n'est pas progressive et proportionnelle à la vitesse de rotation de l'arbre mais qui est plutôt instantanée pour une vitesse de rotation de l'arbre prédéterminée.

De la sorte, il est possible de déclencher l'ouverture et la fermeture de l'orifice de l'arbre uniquement à des vitesses prédéterminées de rotation de l'arbre qui correspondent aux régimes de fonctionnement de la turbomachine pour lesquels la section de passage de l'air circulant dans l'arbre doit être modifiée. Ainsi, la régulation du débit d'air circulant dans l'arbre rotatif de la turbomachine est en fonction des besoins réels nécessaires en air pour l'élément de la turbomachine à pressuriser ou à refroidir.

Selon une caractéristique avantageuse de l'invention, la lame déformable présente une section droite qui est incurvée perpendiculairement à son sens de déformation. Dans ce cas, la section de la lame qui est incurvée est de préférence sensiblement parallèle à l'axe de rotation de l'arbre.

Le dispositif selon l'invention peut comporter en outre un élément de butée pour permettre de bloquer la soupape d'obturation lorsqu'elle libère l'orifice de l'arbre.

La lame déformable et la soupape d'obturation du dispositif selon l'invention peuvent être fixées à l'extérieur de l'arbre, la soupape étant disposée de façon à obturer l'orifice de l'arbre en dessous d'un régime de rotation prédéterminé de l'arbre et à libérer l'orifice en dessus du régime de rotation prédéterminé.

Alternativement, la lame déformable et la soupape d'obturation peuvent être fixées à l'intérieur de l'arbre, la soupape étant disposée de façon à libérer l'orifice de l'arbre en dessous d'un régime de rotation prédéterminé de l'arbre et à obturer l'orifice en dessus du régime de rotation prédéterminé.

La présente invention a également pour objet un arbre de compresseur de turbomachine comportant un dispositif de régulation du débit d'air tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1, 1A, 2 et 2A sont des vues partielles en coupe d'un arbre de turbomachine équipé d'un dispositif de régulation selon un mode de réalisation de l'invention dans deux positions différentes ;
- la figure 3 est une courbe montrant la section d'ouverture de l'orifice de passage de l'arbre des figures 1 et 2 par rapport au régime de rotation de cet arbre ;
- les figures 4, 4A, 5 et 5A sont des vues partielles en coupe d'un arbre de turbomachine équipé d'un dispositif de régulation selon un autre mode de réalisation de l'invention dans deux positions différentes ; et
- la figure 6 est une courbe montrant la section d'ouverture de l'orifice de passage de l'arbre des figures 4 et 5 par rapport au régime de rotation de l'arbre.

### Description détaillée d'un mode de réalisation

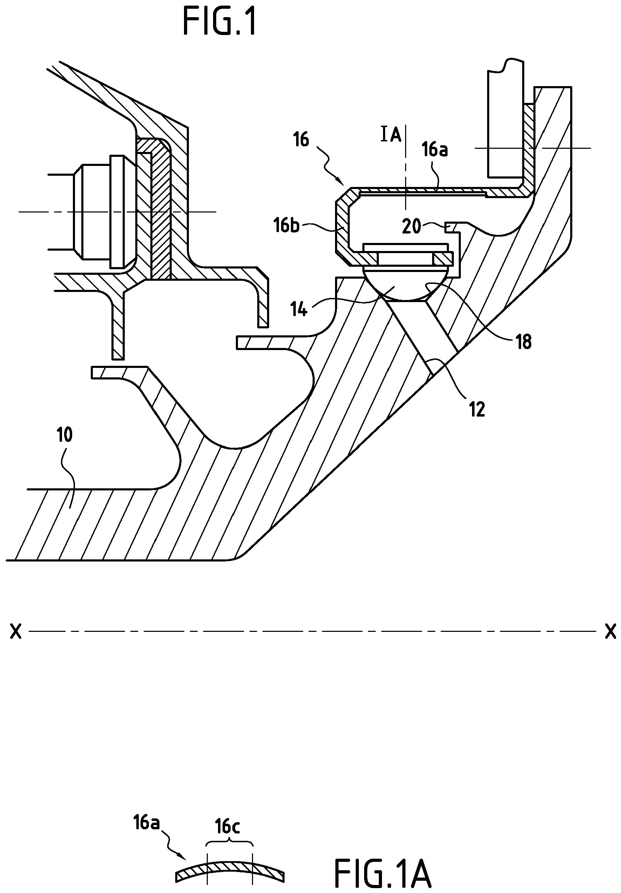

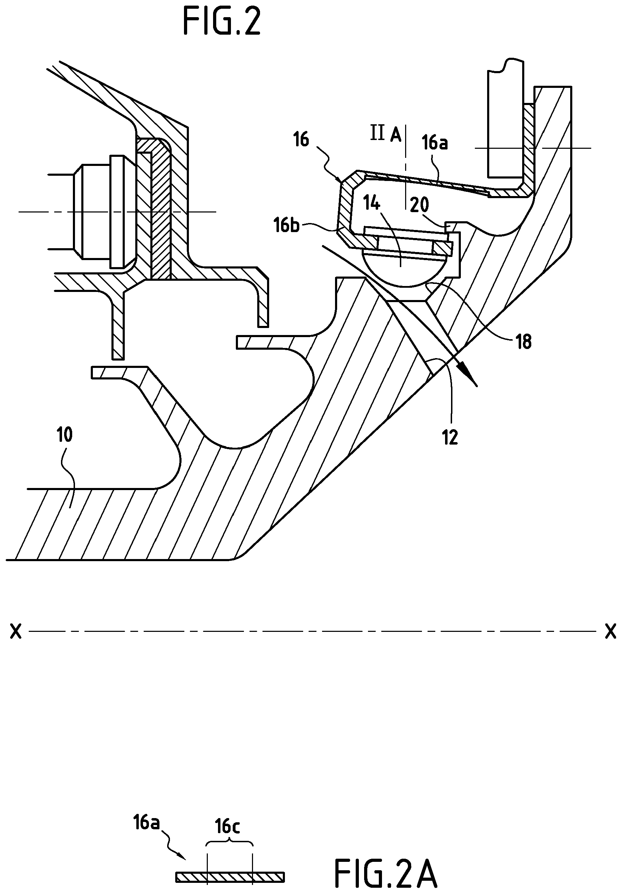

Les figures 1 et 2 représentent partiellement un arbre rotatif 10 de turbomachine équipée d'un dispositif de régulation du débit d'air circulant dans celui-ci.

L'arbre 10 peut être un arbre du compresseur haute ou basse pression de la turbomachine ou encore un arbre de turbine. Cet arbre 10 est centré sur un axe longitudinal X-X de la turbomachine autour duquel il tourne.

L'arbre rotatif 10 est muni d'au moins un orifice 12 le traversant pour le passage d'air. L'air ayant pénétré dans l'arbre 10 par l'intermédiaire du ou des orifices 12 circule donc à l'intérieur de celui-ci d'amont en aval et/ou d'aval en amont.

L'air circulant dans l'arbre 10 peut être prélevé au niveau du compresseur basse pression de la turbomachine et/ou du compresseur haute pression de celle-ci. Il peut être destiné à la pressurisation des enceintes à huile situées en amont et en aval de la turbomachine ou au refroidissement de certaines parties de celle-ci, comme par exemple aux aubes de turbine.

Le dispositif selon l'invention a pour but de réguler le débit d'air circulant dans un tel arbre rotatif 10 en modulant le prélèvement d'air en fonction des besoins en pressurisation ou en refroidissement.

A cet effet, le dispositif de régulation du débit d'air comporte au moins une soupape 14 pour l'obturation de l'orifice 12. Cette soupape 14 est solidaire d'une lame déformable 16 qui est fixée sur l'arbre rotatif 10. La soupape d'obturation 14 peut présenter une section droite en forme de demi-cercle et l'orifice 12 de l'arbre peut être muni d'un siège conique 18 sur lequel repose la soupape afin d'éviter toute fuite d'air.

Sur l'exemple de réalisation des figures 1 et 2, la lame 16 et la soupape 14 du dispositif de régulation sont fixées à l'extérieur de l'arbre rotatif 10.

La lame 16 est apte à se déformer sous l'effet de la force centrifuge résultant de la rotation de l'arbre 10 de sorte que la soupape d'obturation 14 est apte à prendre deux positions différentes selon le régime de rotation de l'arbre ; une position dans laquelle elle obture l'orifice (figure 1) et une autre position dans laquelle elle libère l'orifice pour permettre le passage de l'air (figure 2).

De façon plus précise, la soupape 14 est disposée de façon à obturer l'orifice 12 de l'arbre 10 en dessous d'un régime de rotation prédéterminé de l'arbre (figure 1) et à libérer cet orifice en dessus du régime de rotation prédéterminé (figure 2). La soupape d'obturation 14 doit bien entendu présenter une masse suffisante pour déformer la lame 16 sous l'effet de la force centrifuge.

Un épaulement 20 de l'arbre rotatif 10 peut former une butée pour permettre de bloquer la soupape d'obturation 14 lorsqu'elle libère l'orifice 12 de l'arbre 10. Une telle butée permet ainsi d'éviter une trop grande déformation de la lame 16 solidaire de la soupape 14.

La lame 16 est du type à comportement bilinéaire, c'est-à-dire que la déformée de la lame provoque une modification de la répartition des zones de traction/compression dans la section travaillante. Elle peut être réalisée en acier inoxydable à haute résistance en température et présente une partie travaillante 16a (c'est-à-dire la zone de la lame dans laquelle les déformations sont les plus marquées) qui s'étend de préférence sensiblement parallèlement à l'axe X-X de rotation de l'arbre 10.

La partie travaillante 16a de la lame 16 est fixée à l'une de ses extrémités à l'arbre rotatif 10. A son extrémité opposée, la partie travaillante de la lame présente un coude 16b sur lequel est fixée la soupape d'obturation 14.

Comme illustré par les figures 1A et 2A, la partie travaillante 16a de la lame 16 possède dans sa zone centrale une portion 16c dite à « fibre neutre », c'est-à-dire une portion de la partie travaillante de la lame qui n'est pas sollicitée après déformation de la lame.

Dans sa position initiale correspondant à l'obturation de l'orifice 12 (figure 1), la partie travaillante 16a de la lame 16 a une section droite qui est incurvée perpendiculairement à son sens de déformation (c'est-à-dire que la partie travaillante 16a de la lame a la forme d'un arc de cercle tourné vers l'axe X-X de rotation de l'arbre - figure 1A).

Lorsque la lame 16 est sollicitée sous l'effet de la force centrifuge (figure 2), les portions de la partie travaillante 16a de la lame qui sont situées de part et d'autre de la portion 16c à fibre neutre sont fortement sollicitées en compression et en traction. La lame 16 travaille donc d'abord majoritairement en compression simple et ne se déforme que très légèrement de sorte que la soupape d'obturation 14 reste sensiblement dans sa position initiale.

Au fur et à mesure que la force centrifuge devient importante, la section droite de la partie travaillante 16a de la lame 16 se modifie et le rapport de force entre la flexion et la compression s'inverse. La lame 16 travaille alors majoritairement en flexion simple et l'effort nécessaire pour déformer la lame se réduit fortement de sorte que la soupape d'obturation 14 se déplace dans son autre position, libérant ainsi l'orifice 12 (figure 2). Dans cette position, la partie travaillante 16a de la lame 16 a une section droite sensiblement droite comme illustré sur la figure 2A.

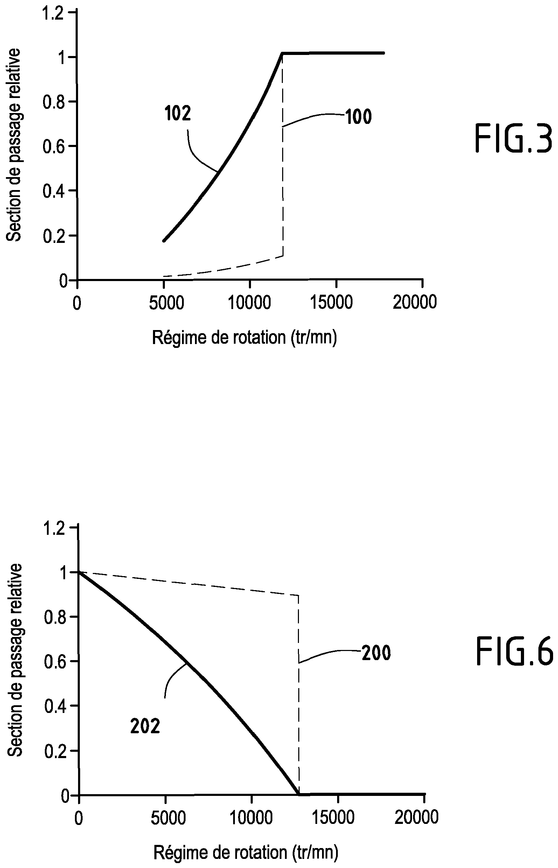

Le mode d'ouverture et de fermeture de l'orifice 12 de l'arbre 10 par le dispositif de régulation selon l'invention est illustré par la figure 3. Sur cette figure, la courbe 100 représente pour le dispositif de régulation selon l'invention la section d'ouverture relative de l'orifice 12 de l'arbre rotatif 10 des figures 1 et 2 en fonction du régime de rotation de cet arbre (exprimé en tours par minute). La courbe 102 est associée à un dispositif de régulation équivalent dont la lame déformable serait cependant à comportement linéaire, c'est-à-dire travaillant en flexion simple.

La courbe 102 montre qu'avec une lame à comportement linéaire, l'ouverture de l'orifice est progressive et proportionnelle à la vitesse de rotation de l'arbre. De plus, les efforts aérodynamiques s'appliquant sur la soupape d'obturation se superposent à l'effort centrifuge et empêchent ainsi la fermeture ou l'ouverture complète de l'orifice. Avec ce type de technologie, le prélèvement d'air peut donc s'avérer trop important à certains régimes de fonctionnement de la turbomachine, ce qui conduit à un réchauffement excessif de certaines pièces sensibles et nuit au rendement de la turbomachine.

Au contraire, avec la lame à comportement bilinéaire du dispositif de régulation selon l'invention (courbe 100), la pleine ouverture de l'orifice s'effectue de manière instantanée et pour une vitesse de rotation de l'arbre prédéterminée (ici de l'ordre de 12000 tr/mn). De façon similaire, la pleine fermeture de l'ouverture s'effectue également de manière instantanée.

En jouant sur l'épaisseur et la forme de la partie travaillante de la lame du dispositif de régulation, il est possible de régler la vitesse de rotation de l'arbre pour laquelle on souhaite déclencher la pleine ouverture et la pleine fermeture de l'orifice.

De la sorte, il est possible de maîtriser l'ouverture et la fermeture de l'orifice et ainsi d'ajuster la quantité et le débit d'air prélevé en fonction des besoins réels de pressurisation ou de refroidissement. Les performances globales de la turbomachine s'en trouvent améliorées.

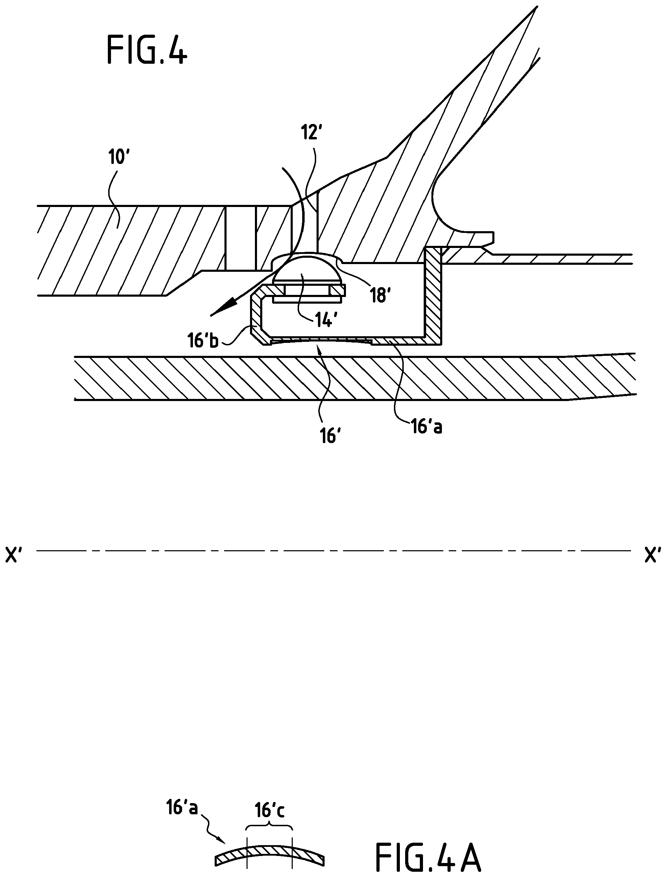

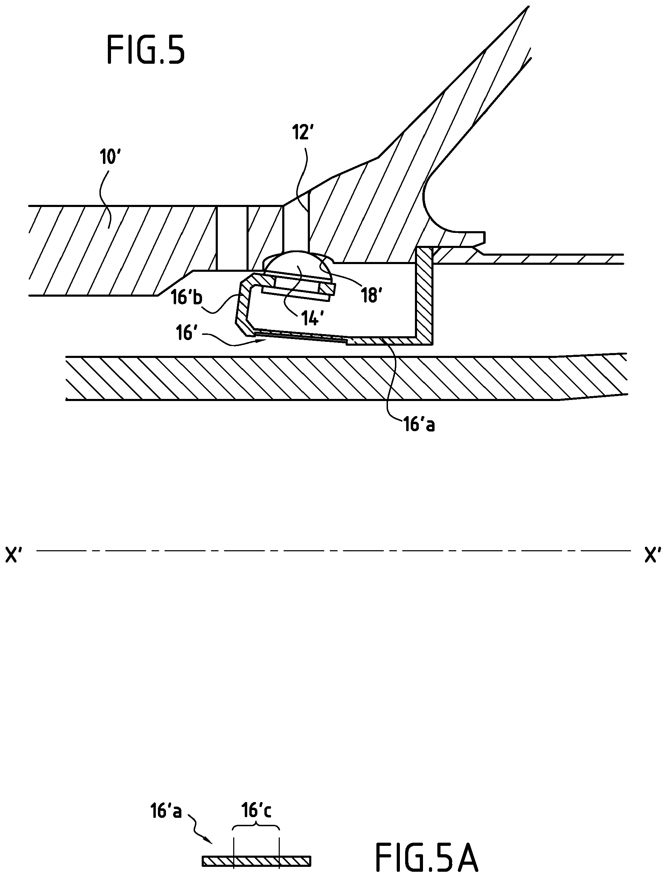

On décrira maintenant le mode de réalisation du dispositif de régulation selon l'invention illustré par les figures 4, 4A, 5 et 5A.

Par rapport au mode de réalisation précédemment décrit, la lame déformable 16' et la soupape d'obturation 14' du dispositif selon ce mode de réalisation sont fixées à l'intérieur de l'arbre rotatif 10'.

En outre, la soupape d'obturation 14' est disposée de façon à libérer l'orifice 12' de l'arbre 10' en dessous d'un régime de rotation prédéterminé de l'arbre (figure 4) et à obturer l'orifice 10' en dessus du régime de rotation prédéterminé (figure 5).

La lame déformable 16' à comportement bilinéaire présente également une partie travaillante 16'a qui s'étend sensiblement parallèlement à l'axe X'-X' de rotation de l'arbre 10'. Cette partie travaillante 16'a est fixée à l'une de ses extrémités à l'arbre rotatif 10' et à son extrémité opposée elle présente un coude 16'b sur lequel est fixée la soupape d'obturation 14'.

Dans sa position initiale correspondant à l'ouverture de l'orifice 12' (figures 4 et 4A), la partie travaillante 16'a de la lame 16' est incurvée perpendiculairement à son sens de déformation. Dans sa position correspondant à l'obturation de l'orifice 12' (figures 5 et 5A), la partie travaillante 16'a de la lame 16' a une section droite qui est sensiblement droite.

Le mode de déformation de la lame 16' du dispositif de régulation selon ce mode de réalisation de l'invention est identique à celui décrit en liaison avec le mode de réalisation précédent.

Le mode d'ouverture et de fermeture de l'orifice 12' de l'arbre 10' est illustré par la figure 6. Les courbes 200 et 202 représentent la section d'ouverture relative de l'orifice 12 de l'arbre rotatif 10 en fonction du régime de rotation de cet arbre (exprimé en tours par minute), respectivement pour le dispositif de régulation selon l'invention et pour un dispositif de régulation équivalent utilisant une lame déformable à comportement linéaire.

Comme pour le mode de réalisation précédent, on constate bien qu'avec ce type de lame déformable à comportement bilinéaire (courbe 200), la pleine fermeture de l'orifice de l'arbre s'effectue de manière instantanée et pour une vitesse de rotation de l'arbre prédéterminée, tandis qu'avec une lame à comportement linéaire (courbe 202), la fermeture de l'orifice est progressive et proportionnelle à la vitesse de rotation de l'arbre.

La présente invention permet donc de réguler le débit d'air délivré par le compresseur (haute et/ou basse pression) de la turbomachine en fonction des besoins exacts de pressurisation ou de refroidissement de certaines parties de la turbomachine. La quantité d'air prélevé correspond ainsi juste aux besoins nécessaires de l'élément à pressuriser (tel qu'une enceinte à huile) ou à refroidir (tel qu'une aube de turbine). La régulation du débit d'air s'effectue de manière autonome et indépendante des autres systèmes de régulation de la turbomachine et fonctionne sans actuateurs. Les performances de la turbomachine s'en trouvent donc améliorées.

Le dispositif de régulation selon l'invention peut être appliqué à réguler la pressurisation des enceintes à huile de la turbomachine, par exemple en prélevant de l'air sur le compresseur haute-pression dans les cas critiques de fonctionnement de la turbomachine (démarrage et ralenti) et en basculant le prélèvement d'air sur le compresseur basse-pression lorsque le régime de fonctionnement de la turbomachine est plus élevé et que la pression de l'air prélevé sur le compresseur basse-pression est suffisante pour assurer seule l'étanchéité des enceintes à huile.

Le dispositif de régulation selon l'invention peut également être appliqué au refroidissement d'une aube mobile de la turbine haute-pression de la turbomachine. L'air est alors prélevé au niveau d'un étage du compresseur haute-pression (il peut aussi être issu du fond de chambre de combustion), circule dans l'arbre de turbine, est re-comprimé le long du disque de turbine haute-pression avant d'être injecté dans le circuit de refroidissement de l'aube par son pied.

## Revendications

1. Dispositif de régulation du débit d'air circulant dans un arbre rotatif d'une turbomachine, le dispositif comprenant un arbre rotatif (10, 10') de turbomachine ayant au moins un orifice (12, 12') le traversant pour le passage de l'air, et une soupape d'obturation (14, 14') de l'orifice, **caractérisé en ce que** la soupape d'obturation de l'orifice est solidaire d'une lame déformable (16, 16') à comportement bilinéaire, la lame (16, 16') étant fixée sur l'arbre (10, 10') et apte à se déformer sous l'effet de la force centrifuge résultant de la rotation de l'arbre de sorte que la soupape (14, 14') est apte à prendre deux positions différentes selon le régime de rotation de l'arbre ; une position dans laquelle elle obture l'orifice (12, 12') et une autre position dans laquelle elle libère l'orifice pour permettre le passage de l'air.

2. Dispositif selon la revendication 1, **caractérisé en ce que** la lame déformable (16, 16') présente une section droite qui est incurvée perpendiculairement à son sens de déformation.

3. Dispositif selon la revendication 2, **caractérisé en ce que** la section de la lame déformable (16, 16') qui est incurvée est sensiblement parallèle à un axe (X-X, X'-X') de rotation de l'arbre (10, 10').

4. Dispositif selon l'une quelconque des revendications 1 à 3, **caractérisé en ce qu'**il comporte en outre un élément de butée (20) pour permettre de bloquer la soupape d'obturation (14, 14') lorsqu'elle libère l'orifice (12, 12') de l'arbre.

5. Dispositif selon l'une quelconque des revendications 1 à 4, **caractérisé en ce que** la lame déformable (16) et la soupape d'obturation (14) sont fixées à l'extérieur de l'arbre (10), la soupape (14) étant disposée de façon à obturer l'orifice (12) de l'arbre en dessous d'un régime de rotation prédéterminé de l'arbre et à libérer l'orifice en dessus du régime de rotation prédéterminé.

6. Dispositif selon l'une quelconque des revendications 1 à 4, **caractérisé en ce que** la lame déformable (16') et la soupape d'obturation (14') sont fixées à l'intérieur de l'arbre (10'), la soupape (14') étant disposée de façon à libérer l'orifice (12') de l'arbre en dessous d'un régime de rotation prédéterminé de l'arbre et à obturer l'orifice en dessus du régime de rotation prédéterminé.

7. Arbre (10, 10') de compresseur de turbomachine, **caractérisé en ce qu'**il comporte un dispositif de régulation du débit d'air selon l'une quelconque des revendications 1 à 6.

## Patentansprüche

1. Vorrichtung zur Regulierung der in einer Drehwelle einer Turbomaschine zirkulierenden Luftmenge, wobei die Vorrichtung eine Turbomaschinendrehwelle (10, 10') mit wenigstens einer sie durchquerenden Öffnung (12, 12') für den Durchgang der Luft sowie ein Ventil zum Verschließen (14, 14') der Öffnung umfasst, **dadurch gekennzeichnet, dass** das Ventil zum Verschließen der Öffnung mit einer verformbaren Zunge (16, 16') mit bilinearem Verhalten fest verbunden ist, wobei die Zunge (16, 16') an der Welle (10, 10') befestigt ist und geeignet ist, sich unter der Wirkung der Fliehkraft, welche aus der Rotation der Welle resultiert, zu verformen, so dass das Ventil (14, 14') geeignet ist, entsprechend der Drehzahl der Welle zwei unterschiedliche Positionen einzunehmen, eine Position, in der es die Öffnung (12, 12') verschließt, und eine andere Position, in der es die Öffnung freigibt, um den Durchgang der Luft zu ermöglichen.

2. Vorrichtung nach Anspruch 1, **dadurch gekennzeichnet, dass** die verformbare Zunge (16, 16') einen Querschnitt aufweist, der senkrecht zu ihrer Verformungsrichtung gebogen ist.

3. Vorrichtung nach Anspruch 2, **dadurch gekennzeichnet, dass** der Abschnitt der verformbaren Zunge (16, 16'), der gebogen ist, zu einer Rotationsachse (X-X, X'-X') der Welle (10, 10') im Wesentlichen parallel verläuft.

4. Vorrichtung nach einem der Ansprüche 1 bis 3, **dadurch gekennzeichnet, dass** sie ferner ein Anschlagelement (20) umfasst, um zu ermöglichen, das Verschlussventil (14, 14') zu blockieren, wenn es die Öffnung (12, 12') der Welle freigibt.

5. Vorrichtung nach einem der Ansprüche 1 bis 4, **dadurch gekennzeichnet, dass** die verformbare Zunge (16) und das Verschlussventil (14) außerhalb der Welle (10) befestigt sind, wobei das Ventil (14) derart angeordnet ist, dass es unterhalb einer vorbestimmten Drehzahl der Welle die Öffnung (12) der Welle verschließt und oberhalb der vorbestimmten Drehzahl die Öffnung freigibt.

6. Vorrichtung nach einem der Ansprüche 1 bis 4, **dadurch gekennzeichnet, dass** die verformbare Zunge (16') und das Verschlussventil (14') innerhalb der Welle (10') befestigt sind, wobei das Ventil (14') derart angeordnet ist, dass es unterhalb einer vorbestimmten Drehzahl der Welle die Öffnung (12') der Welle freigibt und oberhalb der vorbestimmten Drehzahl die Öffnung verschließt.

7. Welle (10, 10') eines Verdichters einer Turbomaschine, **dadurch gekennzeichnet, dass** sie eine Vorrichtung zur Regulierung der Luftmenge nach einem der Ansprüche 1 bis 6 umfasst.

## Claims

1. A device for regulating the flow rate of air flowing in a rotary shaft of a turbomachine, the device comprising a rotary shaft (10, 10') including at least one orifice (12, 12') passing therethrough to pass the air, and a shutter member (14, 14') for shutting the orifice, **characterised in that** the shutter member is secured to a deformable blade (16, 16') presenting bi-linear behavior, the blade (16, 16') being secured to the shaft (10, 10') and being suitable for deforming under the effect of the centrifugal force that results from the shaft rotating such that the shutter member (14, 14') is suitable for taking up two different positions depending on the speed of rotation of the shaft: one position in which it shuts the orifice (12, 12') and another position in which it releases the orifice to allow air to pass through.

2. A device according to claim 1, **characterised in that** the deformable blade (16, 16') presents a right section that is curved perpendicularly to its direction of deformation.

3. A device according to claim 2, **characterised in that** the section of the deformable blade (16, 16') that is curved is substantially parallel to an axis (X-X, X'-X') of rotation of the shaft (10, 10').

4. A device according to any one of claims 1 to 3, **characterised in that** it further comprises an abutment element (20) for enabling the shutter member (14, 14') to be held in position once it has released the orifice (12, 12') in the shaft.

5. A device according to any one of claims 1 to 4, **characterised in that** the deformable blade (16) and the shutter member (14) are located outside the shaft (10), the shutter member (14) being disposed in such a manner as to shut the orifice (12) in the shaft at a speed below a predetermined speed of rotation of the shaft, and to release the orifice at a speed above the predetermined speed of rotation.

6. A device according to any one of claims 1 to 4, **characterised in that** the deformable blade (16') and the shutter member (14') are located inside the shaft (10'), the shutter member (14') being disposed in such a manner as to release the orifice (12') in the shaft at speeds below a predetermined speed of rotation of the shaft, and to open the orifice at speeds above the predetermined speed of rotation.

7. A turbomachine compressor shaft (10, 10'), **characterised in that** is comprises a device for regulating air flow rate according to any one of claims 1 to 6.
